# EUROPEAN PATENT SPECIFICATION

(11) **EP 2 681 284 B1**
(45) Date of publication and mention of the grant of the patent: **22.07.2015**
(21) Application number: 13737367.6
(22) Date of filing: 30.05.2013
(51) Int. Cl.: C09D 11/02

(54) **COMPOSITION FOR PRINTING INK AND METHOD FOR PRINTING OBJECTS**
ZUSAMMENSETZUNG FÜR EINE DRUCKTINTE UND VERFAHREN ZUM BEDRUCKEN VON GEGENSTÄNDEN
COMPOSITION POUR ENCRE D'IMPRESSION ET PROCÉDÉ D'IMPRESSION D'OBJET

(30) Priority: 30.05.2012 NL 2008903; 23.08.2012 NL 2009350
(43) Date of publication of application: 08.01.2014
(73) Proprietor: S+S Patente GmbH, 9620 Lichtensteig (CH)
(72) Inventor: DE GEEST, Marc Jozef Clement, Lede 9340 (BE)
(74) Representative: Verdijck, Gerardus
(86) International application number: PCT/IB2013/001093
(87) International publication number: WO 2013/179123

(56) References cited:
- EP-A1- 1 783 179
- JP-A- 2008 076 855
- US-A- 5 250 133

## Description

The invention relates to a composition for printing ink. The composition relates more particularly to - a lithographic - printing ink, for instance a so-called heatset ink, suitable for printing newspapers, leaflets, magazines as well as packaging material.

EP 1 783 179 discloses an ink composition for ink-jet printing.

Conventional compositions for printing ink make use of a quantity of mineral oil. Such mineral oil can migrate into food via a recycling process used for instance for packagings in the food industry. This imposes significant limitations on the reuse of paper and/or cardboard printed with such printing ink. In the headset process replacing mineral oil with a quantity of vegetable/natural oil, for instance on the basis of soya, results in an adverse effect on drying in particular, whereby the print speed decreases significantly on existing installations by for instance as much as a factor of three. This is therefore very costly from an efficiency viewpoint.

The present invention has for its object to provide a composition for a printing ink which obviates or at least reduces the above stated drawbacks.

This object is achieved with the composition for printing ink according to claim 1.

By adding an ether and removing substantially the entire quantity of mineral oils from the composition for the printing ink it has surprisingly been found that a printed product of good quality, for instance a newspaper, leaflet, magazine or packaging material, can be obtained. It has been found that a good drying result is obtained here, whereby the capacity of the printing process does not change noticeably compared to the conventional composition.

By providing a composition for printing ink with a quantity of ether in combination with other components in a currently preferred embodiment according to the invention a composition is obtained comprising:
- 10-25% organic colour pigment Y12, Y13, Y174, R53-1, R57-1, PB15-1, PB15-3 or soot (black), and/or other pigments,
- 5-20% filler of China clay, calcium carbonate, talc and/or other fillers known to the skilled person,
- 10-30% gum rosin modified resin, examples of rosin modified resins can be phenolic resins. The phenols are advantageously selected from the group nonylphenol, dinonylphenol, p-tertbutylphenol,
- 2-10% hydrocarbon resin preferably having a minimal melting point of 120°C,
- 0-20%, preferably 0-10%, alkyd resin, preferably vegetal oil-based, such as soya oil and linseed oil,
- 0-10% water,
- 0.5-10%, in particular 0-5%, additives for improving the lithographic behaviour of the ink and for improving the mechanical properties of the ink film, and optionally metal dryers for enhancing the oxidation drying, and
- 10-40% ether, preferably an alkyl ether of the type CₓH_{y}-O-CₓH_{y}, preferably with x>3 and y>7.

In the context of the present invention the term "resin" means a resin which has a vegetable origin or which is a synthetic such as a polyurethane resin or an epoxy resin.

In the context of the present invention the term "rosin resin" can also be referred to as colophony or pine resin. A rosin modified resin is a rosin resin wherein the rosin is chemically modified other than by an esterification, a hydrogenation or a dimerization. The chemical modification can for instance be a Diels-Alder reaction, between diterpene carboxylic acid (such as pimaric acid or abietic acid) and an anhydride comprising at least one carbon-carbon double bond (such as maleic acid anhydride) or a carboxylic acid comprising at least one carbon-carbon double bond (such as fumaric acid or maleic acid). Said modified rosin obtained by the reaction of the diterpene carboxylic acid with the anhydride or the carboxylic acid comprises a free -COOH functional group which can then also react with an alcohol, such as a polyol (glycerol or pentaerythritol), with a primary alcohol, with a long hydroxyalkyl (an alcohol with more than six carbon atoms), with a phenol.

The rosin modified phenolic resin can also be the product of the esterification of a polyol (such as glycerol or pentaerythritol) with a polycondensate of rosin, a phenol (of bisphenol A) and formaldehyde. The resins wherein the rosin is modified with a phenol are rosin modified phenolic resins.

In the context of the present invention the term "phenolic resin" means a resin which comprises phenol (C₆H₆OH or a phenolic group (C₆H₆O-). "Phenol" is a hydroxybenzene, i.e. an organic compound consisting of a benzene ring, one hydrogen atom of which is substituted by a hydroxyl group (-OH). In the context of the present invention phenol should be understood as the general name of the phenols: a group of aromatic compounds having one or more OH-groups substituted on the benzene ring, such as one OH-group, two OH-groups, three OH-groups, four OH-groups. Examples of such compounds are cresol (a phenol substituted with a methyl group) and xylenol (a phenol substituted with two methyl groups).

The phenolic resins of the composition according to the present invention comprises phenols which can be substituted or unsubstituted. The substitution(s) on a phenol can be one or more alkyl groups, such as methyl, ethyl, propyl, isopropyl, n-butyl, i-butyl, t-butyl, n-pentyl, i-pentyl, neopentyl, n-hexyl, n-heptyl, n-octyl, n-nonyl, n-decyl, n-undecyl, n-dodecyl. The substitution can be at the ortho (o-), meta (m-) or para (p-) position of the phenol. The alkyl groups can themselves also be substituted by an alkyl such as stated above, or a group chosen from hydroxyl (-OH), thiol (-SH), ketone (C=O), carboxy (-COO-), aldehyde (-CHO).

In the context of the present invention the expression "one or more alkyl groups" should be understood as one, two, three, four. The phenol can thus be alkylphenol, dialkylphenol, trialkylphenol, tetraalkylphenol.

In the context of the present invention the hydrocarbon resin is a resin made from organic compounds. The hydrocarbon resin in the composition according to the invention advantageously comprises at least thirty carbon atoms, more advantageously at least fifty carbon atoms, most advantageously at least sixty carbon atoms.

In the context of the present invention the alkyd resin is a polyester. Alkyd resins are obtained from the polycondensation reaction of polyalcohols (for instance pentaerythritol, trimethylolpropane or propyleneglycol) and polybasic organic acids, such as an alkyl, an alkenyl or an aryl, wherein each said group comprises at least two -COOH groups. Examples are phthalic acid, oxalic acid, malonic acid, maleic acid, fumaric acid, succinic acid, glutaric acid, adipic acid, pimelic acid, suberic acid, azelaic acid, sebacic acid, brassylic acid, or a fatty acid comprising more than one -COOH group, or the corresponding anhydride, such as phthalic acid anhydride.

In the context of the invention the alkyd resin is preferably a vegetal oil-based alkyd resin. A vegetal oil, also referred to as a vegetable oil, can for instance be soya oil and/or linseed oil.

Surprisingly, it has been found that the use of the ether, and optional additives, in the composition according to the invention provides the same properties as the mineral oil and has similar effects. Said ether is advantageously a dialkylether, an alkylalkenylether, an alkylarylether, an alkylcycloalkylether, an alkylcycloalkenylether, a dialkenylether, an alkenylcycloalkylether, an alkenylarylether, a cyclic ether, a diarylether, a crown ether. The ether in the composition according to the invention is more advantageously chosen from the group consisting of alkylarylether, alkylcycloalkylether, dialkylether, diarylether, cyclic ether and a crown ether.

In the context of the present invention an alkylarylether is an ether having the formula alkyl-O-aryl. An alkylcycloalkylether is an ether with the formula: alkyl-O-cycloalkyl. The term "alkyl" should be understood as linear alkyl which is substituted or unsubstituted. The substitution can for instance be a methyl, ethyl, propyl group, or a hydroxy (-OH) group. Dialkylethers are organic compounds which are linear and have the general formula: alkyl-O-alkyl, wherein both alkyl groups have the CₙH₂ₙ₊₁ formula. The alkyl groups may be the same or different. A diarylether is an ether with the aryl-O-aryl formula, such as diphenylether. A cyclic ether is a heterocyclic alkane wherein the heteroatom is a -0-. Crown ethers are compounds with a number of ether compounds in a ring-like molecule.

It has been found particularly that the composition according to the invention is particularly suitable for use as mineral oil-free lithographic heatset printing ink. This makes it possible to reuse printed paper and cardboard for all kinds of applications, including cardboard packagings for the food industry. Machine speeds during printing of at least 10 m/sec have been found attainable at a temperature of a maximum of 135°C.

In the context of the present invention the aryl has at least three carbon atoms. The aryl can also have at least six carbon atoms or ten carbon atoms.

In the context of the present invention an alkenyl is a group comprising at least one double C-C compound (C=C) and at least three carbon atoms, advantageously at least four carbon atoms, more advantageously at least six carbon atoms.

In the context of the present invention cyclic ethers are ethers which form a ring with a heteroatom (the ether functional group -O-). An example which works well in the composition according to the invention is tetrahydrofuran (THF, with formula C₄H₈O).

Crown ethers, also referred to as polyethers, are cyclic chemical compounds consisting of a ring with different ether groups. The most common crown ethers are oligomers of ethylene oxide, wherein the repeating unit is an ethyleneoxy, i.e. -CH2CH20-. Important members of this series are tetramer (n = 4), penta (n = 5) and the hexamer (n = 6). Crown ethers bind determined cations strongly so as to form complexes. Examples are 18-crown-6 (eighteen atoms in the ring and six oxygen atoms), 15-crown-5, and 12-crown-4.

A composition for printing ink according to the invention can alternatively and/or additionally also make use of any other components, such as other phenolic resins.

In an advantageous preferred embodiment according to the present invention the ether comprises di-n-octyl ether.

By adding a linear dialkylether, such as di-n-hexyl ether, di-n-heptyl ether, di-n-octyl ether, di-n-nonyl ether, di-n-decyl ether, di-n-dodecyl ether, di-n-tetradecyl ether, di-n-icosyl ether to the composition according to the invention it has been found is that substantially all mineral oil can be dispensed with in the composition for printing ink. The use of one or more ethers as alternative and/or addition, such as dimethyl ether (CH₃-O-CH₃) and/or diethyl ether (CH₃CH₂-O-CH₂CH₃), is likewise possible according to the invention. It has been found here that an ether of the type CₓH_{y}-O-CₓH_{y} with preferably x>3 and y>7, such as di-n-octyl ether with x=8 and y=17, results in a desired effect of the composition according to the invention for printing ink. The use of heavier alkyl ethers is expressly also possible. The ether in the context of the invention can also comprise two linear alkyl groups which are substituted with for instance a methyl, ethyl or propyl, or phenyl group. The dialkyl in the linear dialkyl ether can advantageously comprise at least three carbon atoms, more advantageously at least four carbon atoms, still more advantageously at least six carbon atoms, most advantageously at least eight carbon atoms. The two alkyl groups may differ from each other or be the same.

Examples of ethers giving good results in the composition according to the invention can be: di-n-hexyl ether, di-n-heptyl ether, di-n-octyl ether, di-n-nonyl ether, di-n-decyl ether, di-n-dodecyl ether, di-n-tetradecyl ether, di-n-icosylether methyl. Di-n-octyl ether in particular gives especially good results.

According to the present invention an aryl ether also gives good results in the composition, such as alkylaryl ether or dialkyl ether. Examples can be an aryl ether chosen from the group consisting of methyl phenyl ether, ethyl phenyl ether, and diphenyl ether.

In an advantageous preferred embodiment according to the present invention the composition comprises a quantity of ether in the range of 10-40% by weight, preferably in the range of 15-30% by weight, and most preferably about 25% by weight.

It has been found that adding a quantity of ether realizes the desired effects of mineral oils in conventional compositions for printing ink. Although the exact quantity also depends on the specific composition in combination with the specific processing conditions such as temperature and speed, it has been found that a percentage of about 15-30% by weight achieves particularly advantageous results.

In a currently preferred embodiment one or more colours are added to the composition so as to also provide the printing ink with colour. It has been found that this does not have an adverse effect on the quality of the printed material.

In an advantageous preferred embodiment according to the present invention the composition comprises a quantity of vegetal oil in the range of 2-25% by weight, and preferably about 5% by weight.

The vegetal oil is preferably a soya oil and/or linseed oil. Other oils are also possible. It has been found that a quantity of alkyl ether in the range of 10-30% by weight can be used in most applications. It has further been found that by using a vegetal oil good results are obtained particularly in so-called coldset and sheetfed applications. For this latter application use is preferably made of the optional metal dryers, wherein the quantity of additives preferably lies in the range of 3-7% by weight, and the quantity of alkyd resin preferably lies in the range of 10-20% by weight.

It is also possible to employ the composition in a similar form in for instance oil-based varnishes. Use is preferably made of said heatset and/or sheetfed compositions for the varnish, wherein the pigments are omitted.

The invention also relates to a printing ink and/or a printed object provided with a print with the composition for printing ink as described above.

Such a printing ink and/or object provides the same effects and advantages as described for the composition. Such an object is for instance a piece of paper, leaflet, newspaper, magazine or packaging.

The invention further relates to the use of the above stated composition and/or a method for printing for instance paper and/or cardboard, comprising of providing a composition for printing ink as described above.

Such a method and the use of the composition for the printing ink have the same effects and advantages as those described and/or shown for the composition. According to the method a composition is first realized wherein mineral oil can preferably be wholly dispensed with. The quantity of vegetable or natural oil, for instance on the basis of soya, can preferably also remain limited, or can even also be dispensed with by using the ether, in particular di-n-octyl ether in a currently preferred embodiment. As stated above, the method according to the invention can also be applied in order to thereby reduce the use of toluene in the printing process, or even to use no toluene at all.

Further advantages, features and details of the invention will be elucidated on the basis of one or more preferred embodiments of the composition. It is expressly noted that other compositions according to the invention are also possible. The given percentages by weight represent an order of magnitude and the percentages by weight can vary by several percent around the weight percentages given below.

A First composition makes use of di-n-octyl ether as an alternative to the use of mineral oil. The composition of a possible embodiment thereof is shown below.

### Composition 1

A first composition according to the invention, which is particularly suitable for so-called heatset ink, comprises
- 15% organic colour pigment Y12 (yellow),
- 7.5% filler of calcium carbonate,
- 25% gum rosin modified phenolic resin, having in particular nonylphenol as the phenol used,
- 5% hydrocarbon resin with a minimum melting point of 120°C,
- 5% alkyd resin on vegetal oil basis, in particular soya oil,
- 5% water,
- 2.5% additives for improving the lithographic behaviour of the ink and for improving the mechanical properties of the ink film, and
- 35% di-n-octyl ether.

The above composition is suitable for processing at the desired conditions. It has been found that the above stated composition produces a good co-action between the plates, the water and the paper.

### Alternative composition 2

An alternative composition, which is particularly suitable for so-called coldset application, comprises:
- 15% organic colour pigment Y12,
- 15% filler of calcium carbonate,
- 15% gum rosin modified phenolic resin, having in particular nonylphenol as the phenol used,
- 5% hydrocarbon resin with a minimum melting point of 120°C,
- 5% alkyd resin on vegetal oil basis, in particular linseed oil,
- 5% water,
- 2% additives for improving the lithographic behaviour of the ink and for improving the mechanical properties of the ink film,
- 18% di-n-octyl ether, and
- 20% vegetal oil, in particular linseed oil.

### Alternative composition 3

An alternative composition, which is particularly suitable for so-called sheetfed application, comprises:
- 20% organic colour pigment Y12,
- 5% filler of calcium carbonate,
- 15% gum rosin modified phenolic resin, having in particular nonylphenol as the phenol used,
- 5% hydrocarbon resin with a minimum melting point of 120°C,
- 15% alkyd resin on vegetal oil basis, in particular soya oil,
- 5% water,
- 7% additives for improving the lithographic behaviour of the ink and for improving the mechanical properties of the ink film, and metal dryers for enhancing the oxidation drying,
- 13% di-n-octyl ether, and
- 15% vegetal oil, in particular soya oil.

The present invention is by no means limited to the above described preferred embodiments thereof. The rights sought are defined by the following claims.

## Claims

1. Composition for printing ink, comprising:
- a quantity of organic pigments, fillers, rosin modified resin and/or hydrocarbon resin and/or alkyd resin; and
- a quantity of ether, wherein the ether comprises a dialkyl ether of the type CₓH_{y}-O-CₓH_{y} with x>3 and y>7.

2. Composition as claimed in claim1, wherein the ether is selected from the group consisting of di-n-hexyl ether, di-n-heptyl ether, di-n-octyl ether and di-n-decyl ether.

3. Composition as claimed in claim 1 or 2, wherein the ether comprises an aryl ether chosen from the group Consisting of methyl phenyl ether, ethyl phenyl ether and diphenyl ether.

4. Composition for printing ink as claimed in claim 1, 2 or 3, wherein the composition comprises a quantity of ether in the range of 10-40% by weight, preferably in the range of 15-30% by weight, and most preferably about 25% by weight.

5. Composition as claimed in one or more of the foregoing claims, wherein the composition comprises a quantity of vegetal oil in the range of 2-25% by weight, and preferably about 5% by weight.

6. Printing ink comprising a composition for printing ink as claimed in one or more of the foregoing claims.

7. Printed object provided with a print on the basis of a composition for printing ink as claimed in one or more of the claims 1-5.

8. Use of the printing ink according to the composition as claimed in one or more of the claims 1-5.

9. Method for printing objects, comprising of providing a composition for printing ink as claimed in one or more of the claims 1-5.

## Patentansprüche

1. Zusammensetzung für eine Drucktinte mit:
- einer Menge von organischen Pigmenten, Füllmitteln, Kolophonium-modifiziertem Harz und/oder Kohlenwasserstoffharz und/oder Alkydharz und
- einer Menge von Äther, wobei der Äther Dialkyläther des Typs CₓH_{y}-O-CₓH_{y} aufweist, mit x>3 und y>7.

2. Zusammensetzung nach Anspruch 1, wobei der Äther ausgewählt ist aus der Gruppe, die besteht aus Di-n-hexyl-Äther, Di-n-heptyl-Äther, Di-n-octyl-Äther und Din-decyl-Äther.

3. Zusammensetzung nach Anspruch 1 oder 2, wobei der Äther einen Aryläther aufweist, der ausgewählt ist aus der Gruppe, die besteht aus Methylphenyläther, Ethylphenyläther und Diphenyläther.

4. Zusammensetzung für Drucktinte nach Anspruch 1, 2 oder 3, wobei die Zusammensetzung eine Menge von Äther im Bereich von 10 bis 40 Gewichts%, vorzugsweise in dem Bereich von 15 bis 30 Gewichts% und insbesondere vorzugsweise etwa 25 Gewichts% aufweist.

5. Zusammensetzung nach einem oder mehreren der vorstehenden Ansprüche, wobei die Zusammensetzung eine Menge von Pflanzenöl im Bereich von 2 bis 25 Gewichts% und vorzugsweise etwa 5 Gewichts% aufweist.

6. Drucktinte mit einer Zusammensetzung für die Drucktinte nach einem oder mehreren der vorstehenden Ansprüche.

7. Druckobjekt mit einem Druck auf Grundlage einer Zusammensetzung für Drucktinte nach einem oder mehreren der Ansprüche 1 bis 5.

8. Verwendung einer Drucktinte mit der Zusammensetzung nach einem oder mehreren der Ansprüche 1 bis 5.

9. Verfahren zum Bedrucken von Objekten mit dem Vorsehen einer Zusammensetzung für Drucktinte nach einem oder mehreren der Ansprüche 1 bis 5.

## Revendications

1. Composition pour encre d'impression, comprenant :
- une quantité de pigments organiques, de charges, de résine modifiée par rosine et/ou de résine hydrocarbure et/ou de résine alkyde ; et
- une quantité d'éther, l'éther comprenant un éther dialkylique du type CₓH_{y}-OCₓH_{y} avec x > 3 et y > 7.

2. Composition selon la revendication 1, dans laquelle l'éther est choisi dans le groupe constitué des éther di-n-hexylique, éther di-n-heptylique, éther di-n-octylique et éther di-n-décylique.

3. Composition selon la revendication 1 ou 2, dans laquelle l'éther comprend un éther arylique choisi dans le groupe constitué des éther méthylphénylique, éther éthylphénylique et éther diphénylique.

4. Composition pour encre d'impression selon la revendication 1, 2 ou 3, la composition comprenant une quantité d'éther dans la plage de 10 à 40 % en poids, de préférence dans la plage de 15 à 30 % en poids, et de manière préférée entre toutes environ 25 % en poids.

5. Composition selon une ou plusieurs des revendications précédentes, la composition comprenant une quantité d'huile végétale dans la plage de 2 à 25 % en poids, et de préférence environ 5 % en poids.

6. Encre d'impression comprenant une composition pour encre d'impression selon une ou plusieurs des revendications précédentes.

7. Objet imprimé pourvu d'une impression à base de composition pour encre d'impression selon une ou plusieurs des revendications 1 à 5.

8. Utilisation de l'encre d'impression selon la composition selon une ou plusieurs des revendications 1 à 5.

9. Procédé d'impression d'objets, comprenant la fourniture d'une composition pour encre d'impression selon une ou plusieurs des revendications 1 à 5.
